# EUROPÄISCHE PATENTSCHRIFT

(11) **EP 3 908 489 B1**
(45) Veröffentlichungstag und Bekanntmachung des Hinweises auf die Patenterteilung: **07.08.2024**
(21) Anmeldenummer: 19828989.4
(22) Anmeldetag: 10.12.2019
(51) Int. Cl.: B60T 13/66, B60T 13/74, B60T 17/22, F16D 55/226, F16D 65/18

(54) **VERFAHREN ZUM EINSTELLEN EINES LÜFTSPIELS EINER ELEKTROMECHANISCHEN BREMSE SOWIE BETREFFENDE BREMSE, STEUERGERÄT UND COMPUTERPROGRAMM**
AIR GAP ADJUSTMENT METHOD FOR AN ELECTROMCHANICAL BRAKE, SUCH A BRAKE, AND AN ECU AND A COMPUTERPROGRAM THEREFOR
PROCÉDÉ DE ADJUSTEMENT DE JEU D'AIR DANS UN FREINAGE ÉLÉCTROMECHANIQUE, UN TEL FREINAGE, UNITÉ DE COMMANDE, ET ET PROGRAMME INFORMATIQUE

(30) Priorität: 10.01.2019 DE 102019100481
(43) Veröffentlichungstag der Anmeldung: 17.11.2021
(73) Patentinhaber: ZF CV Systems Europe BV, 1170 Brussels (BE)
(72) Erfinder: BEIER, Peter, 31515 Wunstorf (DE); REINERS, Arne, 30173 Hannover (DE)
(74) Vertreter: Ohlendorf, Henrike
(86) Internationale Anmeldenummer: PCT/EP2019/084428
(87) Internationale Veröffentlichungsnummer: WO 2020/143973

(56) Entgegenhaltungen:
- EP-A1- 2 631 503
- AT-A2- 516 801

## Beschreibung

Die Erfindung betrifft ein Verfahren zum Einstellen eines Lüftspiels einer elektromechanischen Bremse, insbesondere einer Nutzfahrzeugbremse.

Elektromechanische Bremsen mit Antrieben zum Erzeugen eines Bremsmoments sind in der Kraftfahrzeug-, insbesondere in der Nutzkraftfahrzeugindustrie allgemein bekannt. So offenbart beispielsweise die AT 516 801 A2 eine solche Bremse mit einem elektromechanischen Bremsenaktuator. Ziel ist allgemein, eine Bremse mit elektrischer Energie zu betreiben. Dabei besteht eine wesentliche Herausforderung darin, ausreichend geringe Bremsbetätigungszeiten zu realisieren.

Zur Erreichung konstanter und geringer Bremsbetätigungszeiten sowie zur Erzielung einer konstanten Zuspannkraft kommt der Einstellung des sogenannten Lüftspiels eine zentrale Rolle zu. Dabei bezeichnet der Begriff Lüftspiel den Abstand zwischen wenigstens einem Bremsbelag und der Bremsscheibe einer Bremse im ungebremsten Zustand. Im Falle einer Bremsung ist von einem sich in Richtung der Bremsscheibe zuspannenden Bremsbelag das Lüftspiel zu überwinden, bevor eine mechanische Reibwirkung zwischen Bremsscheibe und Bremsbelag und somit eine Bremswirkung eintritt.

Unter anderem aufgrund eines fortschreitenden Verschleißes der Bremsbeläge über deren Lebensdauer unterliegt das Lüftspiel verschleißbedingten Veränderungen. Für mechanische Bremsen, insbesondere Nutzfahrzeugbremsen, sind aus dem Stand der Technik mechanische Lüftspielnachstellvorrichtungen bekannt, welche das Lüftspiel auf mechanische Art und Weise an einen zunehmenden Verschleiß der Bremsbeläge anpassen.

Nachteilig bei dem beschriebenen Stand der Technik wirkt sich jedoch aus, dass solche mechanischen Lüftspielnachstellvorrichtungen für elektromechanische Bremsen entweder nicht oder nicht mit dem gewünschten Ergebnis verwendet werden können. Gleiches gilt für die aus dem Stand der Technik vorbekannten Verfahren zum Einstellen des Lüftspiels, welches sich ebenfalls nur unzureichend für die Verwendung mit elektromechanischen Bremsen eignen. Aus der EP 2 631 503 A1 geht beispielsweise eine Lüftspielnachstellvorrichtung hervor die einen mechanischen Verschleißnachsteller aufweist und das Lüftspiel elektrisch justiert.

Vor diesem Hintergrund lag der Erfindung die Aufgabe zugrunde, ein Verfahren der eingangs bezeichneten Art dahingehend weiterzubilden, dass die im Stand der Technik aufgefundenen Nachteile möglichst weitgehend behoben werden. Insbesondere ist ein Verfahren zum Einstellen eines Lüftspiels anzugeben, welches auf einfache und zuverlässige Weise die Einstellung eines Lüftspiels bei elektromechanischen Bremsen ermöglicht.

Erfindungsgemäß wird die Aufgabe bei einem Verfahren der eingangs genannten Art durch die Schritte gelöst: Aktivieren eines Lüftspiel-Prüfzyklus für die Bremse, Zuspannen wenigstens eines Bremsbelags der Bremse in Richtung einer Bremsscheibe und Ermittlung einer Kontaktposition, bei welcher der Bremsbelag mit der Bremsscheibe beim Zuspannen in Kontakt tritt, Bestimmen des Lüftspiels sowie eines Belagverschleißgrades auf Basis der ermittelten Kontaktposition, Berechnen eines für die Bremse erforderlichen Lüftspiels und einer erforderlichen Kontaktposition von Bremsbelag und Bremsscheibe in Abhängigkeit vom Belagverschleißgrad unter Verwendung vordefinierter Parameter, -wobei die Parameter eine Bremskennlinie und/oder ein Steifigkeitsfeld, in dem zustandsabhängige Steifigkeitswerte hinterlegt sind, umfassen.

Mittels der erfindungsgemäßen vordefinieren Parameter lassen sich insbesondere auf Basis des Belagverschleißgrades Rückschlüsse ziehen, beispielweise auf die Bremsensteifigkeit bei gegebenem Belagverschleiß, und sich sodann ein für diese Randbedingungen erforderliches Lüftspiel bestimmen.

Dem Verfahren liegt weiterhin die Erkenntnis zugrunde, dass es sich als vorzugswürdig erwiesen hat, zunächst den Ist-Zustand des Lüftspiels einer Bremse zu bestimmen. Dieses wird erfindungsgemäß dadurch erreicht, dass der wenigstens eine Bremsbelag der Bremse zugespannt wird, und sodann jene

Position ermittelt wird, bei welcher der Bremsbelag mit der Bremsscheibe in Kontakt tritt. Auf Basis der ermittelten Kontaktposition wird erfindungsgemäß ein Belagverschleißgrad ermittelt und so der Ist-Zustand der Bremse in Bezug auf den Bremsbelagverschleiß zuverlässig ermittelt.

Sodann wird auf Basis des Belagverschleißgrades und unter Verwendung hinterlegter Parameter ein erforderliches Lüftspiel sowie eine erforderliche Kontaktposition für den vorherrschenden Belagverschleißgrad der Bremsbeläge und der Bremse insgesamt ermittelt. Mittels des erfindungsgemäßen Verfahrens lässt sich somit nicht nur zuverlässig und genau der Ist-Zustand des Belagverschleißes ermitteln, sondern auch ein für diesen Verschleißgrad optimales Lüftspiel, bzw. eine hierfür optimale Kontaktposition.

Die Erfindung wird durch den Verfahrensschritt weitergebildet: Vergleichen der ermittelten Kontaktposition mit der erforderlichen Kontaktposition und/oder des ermittelten Lüftspiels mit dem erforderlichen Lüftspiel, wobei für den Fall, dass die ermittelte Kontaktposition von der erforderlichen Kontaktposition und/oder das ermittelte Lüftspiel von dem erforderlichen Lüftspiel um weniger als einen Toleranzwert abweicht, ein Bremsbereitschaftssignal generiert wird.

Ist mit anderen Worten die Differenz zwischen ermitteltem Lüftspiel und erforderlichem Lüftspiel und/oder ermittelter Kontaktposition und erforderlicher Kontaktposition ausreichend gering, das heißt, unterschreitet sie einen Toleranzwert, so ist die Bremse betriebsbereit, dergestalt, dass eine Anpassung des Lüftspiels nicht erforderlich ist. In diesem Fall wird ein Bremsbereitschaftssignal generiert, welches den entsprechenden Fahrzeugsystemen vorzugsweise eine Bereitschaft der Bremse signalisiert.

Gemäß einer bevorzugten Weiterbildung des Verfahrens wird für den Fall, dass die ermittelte Kontaktposition von der erforderlichen Kontaktposition und/oder das ermittelte Lüftspiel von dem erforderlichen Lüftspiel um mehr als einen Toleranzwert abweicht, eine erforderliche Lüftspielnachstellstrecke berechnet. In diesem Verfahrensschritt wird, für den Fall, dass die Abweichung zwischen ermittelter Kontaktposition und erforderlicher Kontaktposition und/oder des ermittelten Lüftspiels von dem erforderlichen Lüftspiel größer ist als ein Toleranzwert diejenige Lüftspielnachstellstrecke berechnet, um die das ermittelte Lüftspiel anzupassen und zu korrigieren ist. Wir dann auf Basis der ermittelten Werte eine Einstellung des Lüftspiels vorgenommen, umfasst der Lüftspiel-Prüfzyklus folglich auch eine Lüftspiel-Einstellroutine.

Das Verfahren weist vorzugsweise die weiteren Schritte auf: Nachstellen des Lüftspiels gemäß der berechneten erforderlichen Lüftspielnachstellstrecke sowie erneute Aktivierung des Lüftspiel-Prüfzyklus für die Bremse.

Auf Basis der berechneten erforderlichen Lüftspielnachstellstrecke erfolgt in diesen Verfahrensschritten ein Nachstellen des Lüftspiels, mit dem Ziel, die Abweichung zwischen dem nachgestellten Lüftspiel und dem erforderlichen Lüftspiel auf einen Wert zu reduzieren, der kleiner als der Toleranzwert ist.

Das Verfahren wird weiterhin dadurch weitergebildet, dass für den Fall, dass keine Kontaktposition oder kein Lüftspiel aufgefunden werden kann, für welches die ermittelte Kontaktposition von der erforderlichen Kontaktposition und/oder das ermittelte Lüftspiel von dem erforderlichen Lüftspiel um weniger als einen Toleranzwert abweicht, ein Fehlersignal generiert wird.

Mit anderen Worten wird erfindungsgemäß vorgeschlagen, das schleifenförmige Durchlaufen des Lüftspiel-Prüfzyklus durch eine Abbruchbedingung zu unterbrechen. Für den Fall, dass kein Lüftspiel aufgefunden werden kann, welches innerhalb des Toleranzbereiches des erforderlichen Lüftspiels liegt, würde ohne eine solche Abbruchbedingung ausweislich des Verfahrens immer weiter versucht werden, das Lüftspiel nachzustellen. Sollte es aus unterschiedlichen Gründen beispielsweise auch nach mehrfachem Durchlauf des Lüftspiel-Prüfzyklus nicht gelingen, das Lüftspiel auf die gewünschte Art und Weise einzustellen, ist vorzugsweise vorgesehen, die Lüftspiel-Prüfzyklen zu unterbrechen und ein Fehlersignal zu generieren.

In einer bevorzugten Ausführungsform wird das Fehlersignal nach Durchlaufen einer bestimmten Anzahl erfolgloser Lüftspiel-Prüfzyklen generiert, und der Zyklus wird vorzugsweise gestoppt.

Gemäß einer weiteren bevorzugten Ausführungsform wird der Lüftspiel-Prüfzyklus dann gestoppt, wenn die Differenz zwischen ermitteltem Lüftspiel und erforderlichem Lüftspiel bei einem Lüftspiel-Prüfzyklus größer ist als bei dem vorherigen Lüftspiel-Prüfzyklus.

Vorzugsweise erfolgt das Nachstellen des Lüftspiels mittels einer elektrischen Lüftspiel-Nachstellvorrichtung, insbesondere mittels eines elektrischen Antriebs. Die Lüftspiel-Nachstellvorrichtung weist dabei vorzugsweise ein mit dem elektrischen Antrieb gekoppeltes Getriebe auf, mittels welchem die rotatorische Bewegung des Motors in eine translatorische Bewegung zur Einstellung des Lüftspiels transformiert wird. Der elektrische Antrieb ist vorzugsweise als Elektromotor mit oder ohne Drehgeber ausgebildet.

Die Erfindung wird dadurch weitergebildet, dass die Berechnung der benötigten Lüftspiel-Nachstellstrecke die Bestimmung von Parametern für die elektrische Lüftspiel-Nachstellvorrichtung aufweist, insbesondere die Vorgabe einer Nachstellposition für den elektrischen Antrieb.

Auf diese Weise kann ein elektrischer Antrieb unmittelbar durch Vorgabe einer Nachstellposition so angesteuert werden, dass dieser das Lüftspiel auf die gewünschte Weise und um die gewünschte Distanz nachstellt.

Weiterhin wird bevorzugt, dass die Aktivierung des Lüftspiel-Prüfzyklus vor jeder Fahrzeuginbetriebnahme erfolgt, insbesondere durch Aktivierung einer Fahrzeugzündung. Aus Sicherheitsgründen hat sich die Aktivierung und das Durchlaufen des Lüftspiel-Prüfzyklus vor jeder Fahrzeuginbetriebnahme als vorzugswürdig erwiesen. Eine Kopplung der Aktivierung des Lüftspiel-Prüfzyklus mit der Fahrzeugzündung hat sich dabei als besonders zuverlässige und einfache Möglichkeit erwiesen, um sicherzustellen, dass der Lüftspiel-Prüfzyklus bei jeder Fahrzeuginbetriebnahme durchlaufen wird.

Die Erfindung ist vorstehend unter Bezugnahme auf ein Verfahren zum Einstellen eines Lüftspiels einer elektromechanischen Bremse beschrieben worden. In einem weiteren Aspekt betrifft die Erfindung ein Verfahren zum Einstellen eines Lüftspiels bei einem Fahrzeug mit mehreren elektromechanischen Bremsen, insbesondere eines Nutzfahrzeugs.

Die Erfindung löst die eingangs bezeichnete Aufgabe, indem für jede der Bremsen des Fahrzeugs das Verfahren zum Einstellen eines Lüftspiels nach einer der vorstehend beschriebenen bevorzugten Ausführungsformen durchgeführt wird.

Dabei erfolgt die Aktivierung des Lüftspiel-Prüfzyklus einer Bremse vorzugsweise nur für eine erste Anzahl der elektromechanischen Bremsen, die geringer als die Gesamtzahl der am Fahrzeug vorhandenen elektromechanischen Bremsen ist.

Die betreffenden Verfahrensmerkmale haben sich dabei als besonders vorzugswürdig für den Fall erwiesen, dass die elektromechanischen Bremsen zur Erzeugung einer Haltebremskraft auf das Fahrzeug unmittelbar nach dem Starten desselben verwendet werden. Würden beispielsweise alle vier Bremsen eines Fahrzeuges gleichzeitig den erfindungsgemäßen Lüftspiel-Prüfzyklus durchlaufen, so stünde unter Umständen während des Durchlaufens des Prüfzyklus kurzzeitig keine Bremskraft für das Fahrzeug zur Verfügung. Aus diesem Grund hat es sich je nach Fahrzeugtyp und je nach Umweltbedingungen als besonders geeignet erwiesen, die Anzahl der Bremsen eines Fahrzeuges, die einen Lüftspiel-Prüfzyklus gleichzeitig durchlaufen, zu koordinieren. Beispielsweise hat es sich für den Fall, dass eine hohe Haltebremskraft erforderlich ist, als zielführend erwiesen, den Lüftspiel-Prüfzyklus bei lediglich einer der mehreren Bremsen eines Fahrzeuges gleichzeitig zu aktivieren.

In einem weiteren Aspekt betrifft die Erfindung ein Steuergerät zum Einstellen eines Lüftspiels einer elektromechanischen Bremse, insbesondere einer Nutzfahrzeugbremse, mit einer ersten Schnittstelle zur signalleitenden Verbindung des Steuergeräts mit einem Bremsenaktuator, einer zweiten Schnittstelle zur signalleitenden Verbindung des Steuergeräts mit einer Lüftspiel-Nachstellvorrichtung sowie einem Datenspeicher und einem Prozessor.

Die Erfindung löst die eingangs bezeichnete Aufgabe in Bezug auf das Steuergerät, indem das Steuergerät dazu eingerichtet ist, einen Lüftspiel-Prüfzyklus für eine Bremse zu aktivieren, ein Zuspannen wenigstens eines Bremsbelags der Bremse in Richtung einer Bremsscheibe und Ermittlung einer Kontaktposition zu bewirken, bei welcher der Bremsbelag mit der Bremsscheibe beim Zuspannen in Kontakt tritt, das Lüftspiel sowie einen Belagverschleißgrad auf Basis der ermittelten Kontaktposition zu ermitteln, und ein für die Bremse erforderliches Lüftspiel und eine erforderliche Kontaktposition von Bremsbelag und Bremsscheibe in Abhängigkeit vom Belagverschleißgrad unter Verwendung vordefinierter Parameter zu bestimmen.

Vorzugsweise ist das Steuergerät dabei jeweils einer elektromechanischen Bremse zugeordnet. Gemäß einer alternativen Ausführungsform ist das Steuergerät dazu eingerichtet, einen Lüftspiel-Prüfzyklus für mehrere elektromechanische Bremsen auszuführen.

Gemäß einer bevorzugten Weiterbildung ist das Steuergerät ferner dazu eingerichtet, die ermittelte Kontaktposition mit der erforderlichen Kontaktposition und/oder des ermittelten Lüftspiels mit dem erforderlichen Lüftspiel zu vergleichen, wobei für den Fall, dass die ermittelte Kontaktposition von der erforderlichen Kontaktposition und/oder das ermittelte Lüftspiel von dem erforderlichen Lüftspiel um weniger als einen Toleranzwert abweicht, ein Bremsbereitschaftssignal generiert wird, und wobei für den Fall, dass die die ermittelte Kontaktposition von der erforderlichen Kontaktposition und/oder das ermittelte Lüftspiel von dem erforderlichen Lüftspiel um mehr als einen Toleranzwert abweicht, eine erforderliche Lüftspiel-Nachstellstrecke berechnet wird.

Zusammengefasst sieht der erfindungsgemäße Vergleich im Wesentlichen zwei mögliche Ergebnisse vor. Für einen ersten Fall, bei dem die ermittelte Kontaktposition von der erforderlichen Kontaktposition bzw. das ermittelte Lüftspiel von dem erforderlichen Lüftspiel um nicht mehr als einen Toleranzwert abweicht, ist die Bremse betriebsbereit und es wird ein Bremsbereitschaftssignal generiert.

Sollte der Vergleich jedoch ergeben, dass die ermittelte Kontaktposition und das ermittelte Lüftspiel um mehr als einen Toleranzwert von den Sollwerten abweicht, so wird eine erforderliche Lüftspiel-Nachstellstrecke ermittelt, mit dem Ziel, das Lüftspiel um diese Strecke nachzustellen, und zu erreichen, dass das demgemäß nachgestellte Lüftspiel innerhalb der Toleranz liegt.

Weiterhin bevorzugt ist das Steuergerät dazu eingerichtet, das Lüftspiel gemäß der berechneten erforderlichen Lüftspielnachstellstrecke nachzustellen, und den Lüftspiel-Prüfzyklus für die Bremse erneut zu aktivieren. Erfindungsgemäß wir das Lüftspiel in diesen Verfahrensschritten nachgestellt, und zwar gemäß der berechneten erforderlichen Lüftspiel-Nachstellstrecke, und sodann der Lüftspiel-Prüfzyklus erneut aktiviert, um sicherzustellen, dass das Nachstellen des Lüftspiels insoweit erfolgreich war und das nachgestellte Lüftspiel innerhalb des Toleranzbereiches des erforderlichen Lüftspiels liegt.

Weiterhin ist bevorzugt, dass das Steuergerät dazu eingerichtet ist, einen, mehrere oder sämtliche der Verfahrensschritte des Verfahrens gemäß dem ersten Ausführungsbeispiel auszuführen.

In einem weiteren Aspekt betrifft die Erfindung eine elektromechanische Bremse, insbesondere für Nutzfahrzeuge, mit einer Bremsscheibe, wenigstens einem in einem Bremssattel aufgenommenen Bremsbelag, einem elektromechanischen Bremsenaktuator zum Zuspannen des wenigstens einen Bremsbelags in Richtung der Bremsscheibe, einer Lüftspiel-Nachstellvorrichtung zum Einstellen des Lüftspiels zwischen der Bremsscheibe und dem Bremsbelag, und einem Steuergerät.

Die Erfindung löst die eingangs bezeichnete Aufgabe in Bezug auf die elektromechanische Bremse, indem das Steuergerät nach einem der vorstehenden Ausführungsbeispiele ausgebildet ist.

Die Erfindung löst die eingangs bezeichnete Aufgabe ferner in Bezug auf ein Computerprogrammprodukt, welches Befehle umfasst, die ausgeführt auf einem Steuergerät nach einem der oben genannten Ausführungsbeispiele das Verfahren nach einem der dem Verfahren zugehörigen Ausführungsbeispiele ausführen.

Die elektromechanische Bremse und das Computerprogrammprodukt machen sich die gleichen Vorteile und bevorzugten Ausführungsformen zunutze, wie das erfindungsgemäße Verfahren und das erfindungsgemäße Steuergerät. Diesbezüglich wird auf die obigen Ausführungen verwiesen und deren Inhalt hiermit einbezogen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematischer und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, in den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt sich auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend identische oder identische Teile oder Teile mit identischer oder ähnlicher Funktion mit gleichen Bezugszeichen versehen. Weitere Vorteile, Merkmale und Einzelheiten der Erfindung ergeben sich aus der nachfolgenden Beschreibung, der bevorzugten Ausführungsformen sowie anhand der folgenden Figuren. Im Einzelnen zeigen:
- Fig. 1: ein erstes Ausführungsbeispiel einer erfindungsgemäßen elektromechanischen Bremse mit einem Steuergerät zum Einstellen des Lüftspiels in einer perspektivischen Ansicht;
- Fig. 2: ein Blockschaltbild eines Verfahrens zum Einstellen eines Lüftspiels einer elektromechanischen Bremse; und
- Fig. 3: ein Blockschaltbild eines Verfahrens zum Einstellen eines Lüftspiels elektromechanischer Bremsen eines Fahrzeuges.

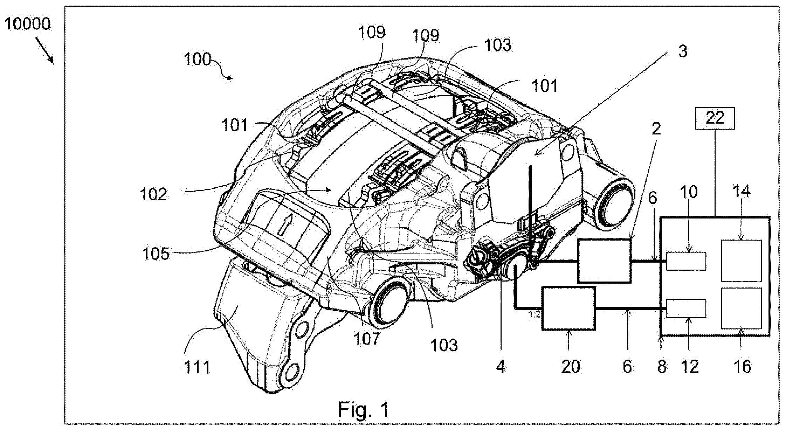

Figur 1 zeigt ein Fahrzeugsystem 10000 mit einer elektromechanischen Bremse 100. Die elektromechanische Bremse 100 weist einen Bremsenträger 111 sowie einen Bremssattel 107 auf. Auf dem Bremsenträger 111 sind Bremsbeläge 103 geführt und aufgenommen. Mittels eines elektromechanischen Bremsenaktuators 2 sind die Bremsbeläge 103 in Richtung eines Aufnahmeraums 105 für eine Bremsschreibe (nicht gezeigt) bewegbar und mit einer solchen verspannbar. Die Bremsbeläge 103 werden durch Niederhaltebügel 109 sowie Niederhaltefedern 101 in Position gehalten. Nach Entfernen des Niederhaltebügels 109 und der Niederhaltefedern 101 sind die Bremsbeläge 103 von dem Bremsenträger 111 entnehmbar und können ausgetauscht werden. Der Bremsenträger 111 weist ferner eine Belagrückhalteplatte 102 zur lateralen Führung der Bremsbeläge 103 auf.

Befindet sich die elektromechanische Bremse 100 in einem nicht betätigten Zustand, das heißt wird von dem Bremsenaktuator 2 keine Zuspannkraft auf die Bremsbeläge 103 aufgebracht, so besteht zwischen Bremsbelag 103 und Bremsscheibe 105 ein Lüftspiel L. Jene Position, bei welcher wenigstens ein Bremsbelag 103 mit der Bremsscheibe 105 in Kontakt tritt, wird als Kontaktposition K bezeichnet. Das Zuspannen der Bremse 100 erfolgt durch Aufbringen einer Betätigungskraft durch den Bremsenaktuator 2 auf eine Schnittstelle für einen Zuspannmechanismus 3, welcher wiederum ein Zuspannen der Bremsbeläge 103 in Richtung der Bremsscheibe 105 bewirkt.

Der Bremsenaktuator 2 empfängt ein Aktuatorsignal 22 zur Betätigung des Bremsenaktuators 2. Der Bremsenaktuator 2 ist ferner über eine signalleitende Verbindung 6 mit einer ersten Schnittstelle 10 eines Steuergerätes 8 verbunden. Das Steuergerät 8 ermittelt mit dem Aktuator 2 eine Kontaktposition K, bei welcher die Bremsbeläge 103 mit der Bremsscheibe 105 in Kontakt treten. Das Steuergerät 8 weist ferner einen Datenspeicher 14 sowie einen Prozessor 16 auf. Darüber hinaus weist das Steuergerät 8 eine zweite Schnittstelle 12 auf, welche mittels einer signalleitenden Verbindung 18 mit einer Lüftspiel-Nachstellvorrichtung 20, welche vorzugsweise als Schrittmotor 20 ausgebildet ist, verbunden ist. Die elektrische Lüftspiel-Nachstellvorrichtung 20 ist in einen Verschleißsensor 4 integriert. Die signalleitenden Verbindungen 6, 18 können sowohl als drahtgebundene Verbindungen als auch als drahtlose Verbindungen ausgebildet sein.

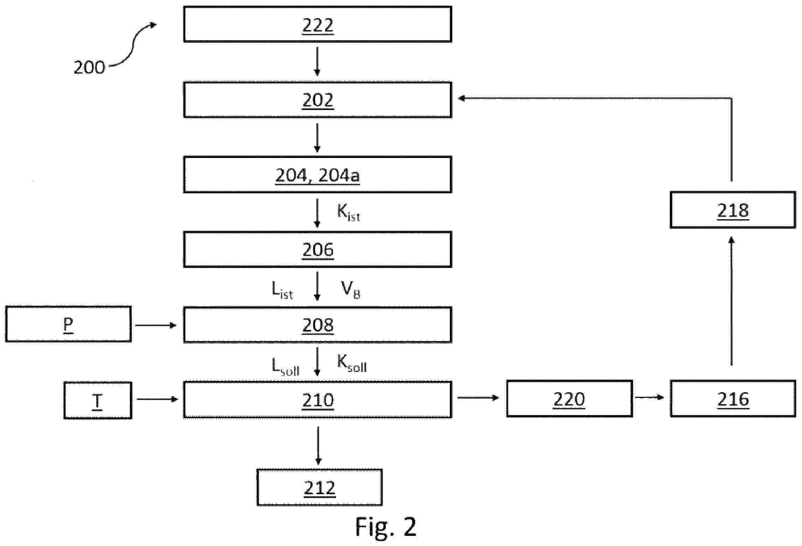

Ein Verfahren 200 zum Einstellen eines Lüftspiels einer elektromechanischen Bremse 100 gemäß Figur 1 ist in Figur 2 anhand eines Blockschaltbildes veranschaulicht. Das Verfahren 200 wird gemäß Schritt 222 durch Aktivierung einer Fahrzeugzündung gestartet. Mit der Aktivierung der Fahrzeugzündung im Verfahrensschritt 222 erfolgt im Schritt 202 das Aktivieren eines Lüftspiel-Prüfzyklus. Im Rahmen dieses Lüftspiel-Prüfzyklus erfolgt gemäß Schritt 204 ein Zuspannen des wenigstens einen Bremsbelags 103 der Bremse 100 in Richtung einer Bremsscheibe 105 durch den Bremsenaktuator 2.

Im Schritt 204a wird eine Kontaktposition Kᵢₛₜ ermittelt, bei welcher der Bremsbelag 103 mit der Bremsscheibe 105 beim Zuspannen in Kontakt tritt. Aus der Kontaktposition Kᵢₛₜ erfolgt gemäß Schritt 206 eine Bestimmung des Lüftspiels Lᵢₛₜ sowie eines Belagverschleißgrades V_{B}.

Weiterhin erfolgt ausweislich des Schrittes 208 in Abhängigkeit vom ermittelten Belagverschleißgrad V_{B} eine Berechnung eines für die Bremse 100 erforderlichen Lüftspiels Lₛₒₗₗ und einer erforderlichen Kontaktposition Kₛₒₗₗ, wobei gemäß Schritt 208 auf vordefinierte Parameter P zurückgegriffen wird. Ausweislich des Schritts 210 erfolgt ein Vergleich der ermittelten Kontaktposition Kᵢₛₜ mit der erforderlichen Kontaktposition Kₛₒₗₗ und des ermittelten Lüftspiels Lᵢₛₜ mit dem erforderlichen Lüftspiel Lₛₒₗₗ. Für den Fall, dass die ermittelte Kontaktposition Kᵢₛₜ von der erforderlichen Kontaktposition Kₛₒₗₗ und/oder das ermittelte Lüftspiel Lᵢₛₜ von dem erforderlichen Lüftspiel Lₛₒₗₗ um weniger als einen Toleranzwert T abweicht, wird ein Bremsbereitschaftssignal 212 generiert.

Für den Fall, dass die ermittelte Kontaktposition Kᵢₛₜ von der erforderlichen Position Kₛₒₗₗ und/oder das ermittelte Lüftspiel Lᵢₛₜ von dem erforderlichen Lüftspiel Lₛₒₗₗ um mehr als den Toleranzwert T abweicht, wird eine erforderliche Lüftspiel-Nachstellstrecke 216 berechnet.

Gemäß Schritt 218 erfolgt ein Nachstellen des Lüftspiels Lᵢₛₜ gemäß der berechneten erforderlichen Lüftspiel-Nachstellstrecke 216 und eine erneute Aktivierung des Lüftspiel-Prüfzyklus 202 für die Bremse 100.

Für den Fall, dass keine Kontaktposition Kᵢₛₜ oder kein Lüftspiel Lᵢₛₜ aufgefunden werden kann, für welches die ermittelte Kontaktposition Kᵢₛₜ von der erforderlichen Kontaktposition Kₛₒₗₗ und/oder das ermittelte Lᵢₛₜ von dem erforderlichen Lüftspiel Lₛₒₗₗ um weniger als den Toleranzwert T abweicht, wird gemäß Schritt 220 ein Fehlersignal generiert. Das Fehlersignal gemäß Schritt 220 kann dabei etwa nach einer bestimmbaren Anzahl erfolgloser Zyklusdurchläufe oder auf Basis weiterer Parameter erfolgen.

Die Berechnung 216 der benötigten Lüftspiel-Nachstellstrecke 218 kann ferner die Bestimmung von Betriebsparametern für die elektrische Lüftspiel-Nachstellvorrichtung 20 umfassen, beispielsweise die Vorgabe einer Nachstell-Schrittanzahl oder Nachstellposition für den elektrischen Antrieb (Elektromotor) einer elektrischen Lüftspiel-Nachstellvorrichtung 20.

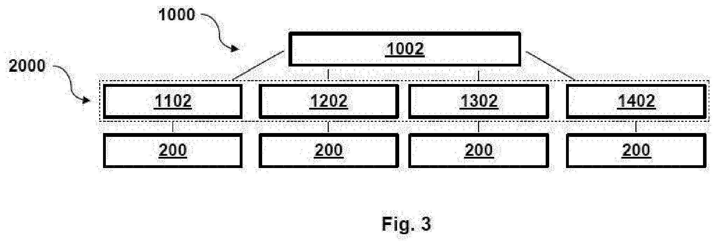

Figur 3 zeigt ein Verfahren 1000 zum Einstellen eines Lüftspiels L elektromechanischer Bremsen 1102, 1202, 1302, 1402 eines Fahrzeugs 2000. Jede der Bremsen 1102, 1202, 1302, 1402, durchläuft ein Verfahren 200 zum Einstellen eines Lüftspiels L einer jeden elektromechanischen Bremse 1102, 1202, 1302, 1402.

Gemäß Schritt 1002 erfolgt dabei eine Koordinierung der Aktivierung der Lüftspiel-Prüfzyklen der Bremsen 1102, 1202, 1302, 1402. Diese Koordinierung ist vorzugsweise dergestalt ausgebildet, dass nur jeweils eine der Bremsen 1102, 1202, 1302, 1402 das Verfahren 200 zum Einstellen eines Lüftspiels einer Bremse durchläuft. In Abhängigkeit vom Fahrzeugtyp, dem Betriebsmodus und weiterer Umweltbedingungen, kann es jedoch ferner vorteilhaft sein, dass jeweils zwei der elektromechanischen Bremsen 1102, 1202, 1302, 1402 oder gar drei der betreffenden Bremsen 1102, 1202, 1302, 1402 das Verfahren 200 zum Einstellen eines Lüftspiels simultan durchlaufen.

### Liste der verwendeten Bezugszeichen

- 2: Bremsenaktuator
- 3: Schnittstelle für Zuspannmechanismus
- 4: Verschleißsensor
- 6: signalleitende Verbindung
- 8: Steuergerät
- 10: Erste Schnittstelle
- 12: Zweite Schnittstelle
- 14: Datenspeicher
- 16: Prozessor
- 18: signalleitende Verbindung
- 20: elektrische Lüftspiel-Nachstellvorrichtung
- 22: Aktuatorsignal (Eingangssignal)
- 100: elektromechanische Bremse
- 101: Niederhaltefedern
- 102: Belagrückenplatte
- 103: Bremsbeläge
- 105: Aufnahmeraum für Bremsscheibe
- 107: Bremssattel
- 109: Niederhaltebügel
- 111: Bremsenträger
- 200: Verfahren zum Einstellen eines Lüftspiels einer Bremse
- 202: Aktivieren eines Lüftspiel-Prüfzyklus
- 204: Zuspannen wenigstens eines Bremsbelags
- 204a: Ermittlung einer Kontaktposition, bei welcher der Bremsbelag mit der Bremsscheibe beim Zuspannen in Kontakt tritt
- 206: Bestimmen eines Lüftspiels und Belagverschleißgrades
- 208: Berechnen eines erforderlichen Lüftspiels
- 210: Vergleichen der ermittelten Kontaktposition mit der erforderlichen Kontaktposition
- 212: Generierung Bremsbereitschaftssignal
- 216: Berechnung einer erforderlichen Lüftspielnachstellstrecke
- 218: Nachstellen des Lüftspiels
- 220: Generierung eines Fehlersignals
- 222: Aktivierung der Fahrzeugzündung
- 1000: Verfahren zum Einstellen eines Lüftspiels der Bremsen eines Fahrzeugs
- 1002: Aktivierung des Lüftspiel-Prüfzyklus mehrerer Bremsen
- 1102, 1202, 1302, 1402: Fahrzeugbremsen
- 2000: Fahrzeug

- 10000: Fahrzeugsystem
- K: Kontaktposition
- Kᵢₛₜ: ermittelte Kontaktposition
- Kₛₒₗₗ: erforderliche Kontaktposition
- L: Lüftspiel
- Lᵢₛₜ: ermitteltes Lüftspiel
- Lₛₒₗₗ: erforderliches Lüftspiel
- P: Parameter
- T: Toleranzwert
- V_{B}: Belagverschleißgrad

## Patentansprüche

1. Verfahren (200) zum Einstellen eines Lüftspiels (L) einer elektromechanischen Bremse (100), insbesondere einer Nutzfahrzeugbremse (100), umfassend die Schritte:
- Aktivieren (202) eines Lüftspiel-Prüfzyklus für die Bremse (100);
- Zuspannen (204) wenigstens eines Bremsbelags (103) der Bremse (100) in Richtung einer Bremsscheibe (105) und Ermittlung (204a) einer Kontaktposition (Kᵢₛₜ), bei welcher der Bremsbelag (103) mit der Bremsscheibe (105) beim Zuspannen (204) in Kontakt tritt;
- Bestimmen (206) des Lüftspiels (Lᵢₛₜ) sowie eines Belagverschleißgrades (V_{B}) auf Basis der ermittelten Kontaktposition (Kᵢₛₜ);
- Berechnen (208) eines für die Bremse (100) erforderlichen Lüftspiels (Lₛₒₗₗ) und einer erforderlichen Kontaktposition (K_{Soll}) von Bremsbelag (103) und Bremsscheibe (105) in Abhängigkeit vom Belagverschleißgrad (V_{B}) unter Verwendung vordefinierter Parameter (P),
wobei die vordefinierten Parameter (P) umfassen:
- Bremsenkennlinie und/oder
- Steifigkeitskennfeld, in dem zustandsabhängige Steifigkeitswerte hinterlegt sind.

2. Verfahren (200) nach Anspruch 1, ferner umfassend den Schritt:
- Vergleichen (210) der ermittelten Kontaktposition (Kᵢₛₜ) mit der erforderlichen Kontaktposition (K_{Soll}) und/oder des ermittelten Lüftspiels (Lᵢₛₜ) mit dem erforderlichen Lüftspiel (L_{Soll}), wobei für den Fall, dass die ermittelte Kontaktposition (Kᵢₛₜ) von der erforderlichen Kontaktposition (K_{Soll}) und/oder das ermittelte Lüftspiel (Lᵢₛₜ) von dem erforderlichen Lüftspiel (L_{Soll}) um weniger als einen Toleranzwert (T) abweicht, ein Bremsbereitschaftssignal (212) generiert wird.

3. Verfahren (200) nach Anspruch 2,
wobei für den Fall, dass die ermittelte Kontaktposition (Kᵢₛₜ) von der erforderlichen Kontaktposition (K_{Soll}) und/oder das ermittelte Lüftspiel (Lᵢₛₜ) von dem erforderlichen Lüftspiel (Lₛₒₗₗ) um mehr als einen Toleranzwert (T) abweicht, eine erforderliche Lüftspielnachstellstrecke (216) berechnet wird.

4. Verfahren (200) nach Anspruch 3, mit den weiteren Schritten:
- Nachstellen (218) des Lüftspiels (Lᵢₛₜ) gemäß der berechneten erforderlichen Lüftspielnachstellstrecke (216);
- Erneute Aktivierung des Lüftspiel-Prüfzyklus (202) für die Bremse (100).

5. Verfahren (200) nach Anspruch 4,
wobei für den Fall, dass keine Kontaktposition (Kᵢₛₜ) oder kein Lüftspiel (Lᵢₛₜ) aufgefunden werden kann, für welches die ermittelte Kontaktposition (Kᵢₛₜ) von der erforderlichen Kontaktposition (K_{Soll}) und/oder das ermittelte Lüftspiel (Lᵢₛₜ) von dem erforderlichen Lüftspiel (Lₛₒₗₗ) um weniger als einen Toleranzwert (T) abweicht ein Fehlersignal (220) generiert wird.

6. Verfahren (200) nach Anspruch 4,
wobei das Nachstellen (218) des Lüftspiels (L) mittels einer elektrischen Lüftspiel-Nachstellvorrichtung (20), insbesondere mittels eines elektrischen Antriebs (20), erfolgt.

7. Verfahren (200) nach einem der Ansprüche 3 bis 6, insbesondere nach Anspruch 6,
wobei die Berechnung (216) der benötigten Lüftspielnachstellstrecke (218) die Bestimmung von Betriebsparametern für die elektrische Lüftspiel-Nachstellvorrichtung (20), insbesondere die Vorgabe einer Nachstell-position für den elektrischen Antrieb (20), aufweist.

8. Verfahren (200) nach einem der vorstehenden Ansprüche,
wobei die Aktivierung (202) des Lüftspiel-Prüfzyklus vor jeder Fahrzeuginbetriebnahme erfolgt, insbesondere durch Aktivierung (222) einer Fahrzeugzündung.

9. Verfahren (1000) zum Einstellen eines Lüftspiels (L) bei einem Fahrzeug mit mehreren elektromechanischen Bremsen (1102, 1202, 1302, 1402), insbesondere einem Nutzfahrzeug (2000), wobei für jede der Bremsen (1102, 1202, 1302, 1402) das Verfahren (200) zum Einstellen eines Lüftspiels (L) nach einem der Ansprüche 1 bis 8 ausgeführt wird.

10. Verfahren (1000) nach Anspruch 9, wobei der Lüftspiel-Prüfzyklus nur für eine erste Anzahl der elektromechanischen Bremsen (1102, 1202, 1302, 1402) erfolgt, die geringer als die Gesamtzahl der am Fahrzeug vorhandenen elektromechanischen Bremsen 1102, 1202, 1302, 1402) ist.

11. Steuergerät (8) zum Einstellen eines Lüftspiels (L) einer elektromechanischen Bremse (100), insbesondere einer Nutzfahrzeugbremse (100), mit
- einer ersten Schnittstelle (10) zur signalleitenden Verbindung (6) des Steuergeräts (8) mit einem Bremsenaktuator (2);
- einer zweiten Schnittstelle (12) zur signalleitenden Verbindung (18) des Steuergeräts (8) mit einer elektrischen Lüftspiel-Nachstellvorrichtung (20);
- einem Datenspeicher (14) und einem Prozessor (16),
wobei das Steuergerät (8) dazu eingerichtet ist,
- einen Lüftspiel-Prüfzyklus für die Bremse (100) zu aktivieren;
- ein Zuspannen (204) wenigstens eines Bremsbelags (103) der Bremse (100) in Richtung einer Bremsscheibe (105) mittels des Bremsenaktuators (2) zu bewirken und eine Kontaktposition (Kᵢₛₜ) zu ermitteln, bei welcher der Bremsbelag (103) mit der Bremsscheibe (105) beim Zuspannen (204) in Kontakt tritt;
- das Lüftspiel (Lᵢₛₜ) sowie einen Belagverschleißgrad (V_{B}) auf Basis der ermittelten Kontaktposition (Kᵢₛₜ) zu bestimmen, und
- ein für die Bremse (100) erforderliches Lüftspiel (L_{Soll}) und eine erforderliche Kontaktposition (K_{Soll}) von Bremsbelag (103) und Bremsscheibe (105) in Abhängigkeit vom Belagverschleißgrad (V_{B}) unter Verwendung vordefinierter Parameter (P) zu berechnen und
- wobei die vordefinierten Parameter (P) umfassen:
- Bremsenkennlinie und/oder
- Steifigkeitskennfeld, in dem zustandsabhängige Steifigkeitswerte hinterlegt sind.

12. Steuergerät (8) nach Anspruch 11,
wobei das Steuergerät (8) dazu eingerichtet ist,
die ermittelte Kontaktposition (Kᵢₛₜ) mit der erforderlichen Kontaktposition (K_{Soll}) und/oder das ermittelte Lüftspiel (Lᵢₛₜ) mit dem erforderlichen Lüftspiel (Lₛₒₗₗ) zu vergleichen,
für den Fall, dass die ermittelte Kontaktposition (Kᵢₛₜ) von der erforderlichen Kontaktposition (K_{Soll}) und/oder das ermittelte Lüftspiel (Lᵢₛₜ) von dem erforderlichen Lüftspiel (Lₛₒₗₗ) um weniger als einen Toleranzwert (T) abweicht, ein Bremsbereitschaftssignal (212) zu generieren, und
für den Fall, dass die ermittelte Kontaktposition (Kᵢₛₜ) von der erforderlichen Kontaktposition (K_{Soll}) und/oder das ermittelte Lüftspiel (Lᵢₛₜ) von dem erforderlichen Lüftspiel (Lₛₒₗₗ) um mehr als einen Toleranzwert (T) abweicht, eine erforderliche Lüftspielnachstellstrecke (216) zu berechnen.

13. Steuergerät (8) nach einem der Ansprüche 11 oder 12,
wobei das Steuergerät (8) dazu eingerichtet ist,
das Lüftspiel (L) gemäß der berechneten erforderlichen Lüftspielnachstellstrecke (216) nachzustellen, und
den Lüftspiel-Prüfzyklus (202) für die Bremse (100) erneut zu aktivieren.

14. Steuergerät (8) nach einem der Ansprüche 11 bis 13,
wobei das Steuergerät (8) dazu eingerichtet ist, einen, mehrere oder sämtliche der Verfahrensschritte des Verfahrens (200) nach einem der Ansprüche 5 bis 9 auszuführen.

15. Elektromechanische Bremse (100), insbesondere für Nutzfahrzeuge, mit einer Bremsscheibe (105),
wenigstens einem in einem Bremssattel (107) aufgenommenen Bremsbelag (103),
einem elektromechanischen Bremsenaktuator (2) zum Zuspannen des wenigstens einen Bremsbelags (103) in Richtung der Bremsscheibe (105),
einer elektrischen Lüftspiel-Nachstellvorrichtung (20) zum Einstellen des Lüftspiels (L) zwischen der Bremsscheibe (105) und dem Bremsbelag (103), und
einem Steuergerät (8),
**dadurch gekennzeichnet, dass** das Steuergerät (8) nach einem der Ansprüche 11 bis 14 ausgebildet ist.

16. Computerprogrammprodukt, welches Befehle umfasst, die das Verfahren (200, 1000) nach einem der Ansprüche 1 bis 10 ausführen, wenn sie auf einem Steuergerät (8) nach einem der Ansprüche 11 bis 14 werden.

## Claims

1. Method (200) for setting a clearance (L) of an electromechanical brake (100), in particular a commercial vehicle brake (100), comprising the steps of:
- activating (202) a clearance test cycle for the brake (100);
- applying (204) at least one brake pad (103) of the brake (100) in the direction of a brake disc (105) and ascertaining (204a) a contact position (Kᵢₛₜ) in which the brake pad (103) comes into contact with the brake disc (105) during the application (204);
- determining (206) the clearance (Lᵢₛₜ) and a degree of pad wear (V_{B}) on the basis of the ascertained contact position (Kᵢₛₜ);
- calculating (208) a clearance (L_{Soll}) required for the brake (100) and a required contact position (K_{Soll}) of the brake pad (103) and brake disc (105) depending on the degree of pad wear (V_{B}) using predefined parameters (P),
wherein the predefined parameters comprise (P):
- a brake characteristic curve and/or
- a stiffness characteristic map in which condition-dependent stiffness values are stored.

2. Method (200) according to claim 1, further comprising the step of:
- comparing (210) the ascertained contact position (Kᵢₛₜ) with the required contact position (K_{Soll}) and/or the ascertained clearance (Lᵢₛₜ) with the required clearance (L_{Soll}), wherein, in the event that the ascertained contact position (Kᵢₛₜ) deviates from the required contact position (K_{Soll}) and/or the ascertained clearance (List) deviates from the required clearance (L_{Soll}) by less than a tolerance value (T), a brake ready signal (212) is generated.

3. Method (200) according to claim 2,
wherein, in the event that the ascertained contact position (Kᵢₛₜ) deviates from the required contact position (K_{Soll}) and/or the ascertained clearance (Lᵢₛₜ) deviates from the required clearance (L_{Soll}) by more than a tolerance value (T), a required clearance adjustment distance (216) is calculated.

4. Method (200) according to claim 3, having the further steps of:
- adjusting (218) the clearance (Lᵢₛₜ) according to the calculated required clearance adjustment distance (216);
- reactivating the clearance test cycle (202) for the brake (100).

5. Method (200) according to claim 4,
wherein, in the event that no contact position (Kᵢₛₜ) or no clearance (Lᵢₛₜ) can be found for which the ascertained contact position (Kᵢₛₜ) deviates from the required contact position (K_{Soll}) and/or the ascertained clearance (Lᵢₛₜ) deviates from the required clearance (L_{Soll}) by less than a tolerance value (T), an error signal (220) is generated.

6. Method (200) according to claim 4,
wherein the adjustment (218) of the clearance (L) is performed by means of an electric clearance adjustment device (20), in particular by means of an electric drive (20).

7. Method (200) according to any of claims 3 to 6, in particular according to claim 6,
wherein calculating (216) the required clearance adjustment distance (218) comprises determining operating parameters for the electric clearance adjustment device (20), in particular specifying an adjustment position for the electric drive (20).

8. Method (200) according to any of the preceding claims,
wherein activating (202) the clearance test cycle is performed before each vehicle start-up, in particular by activating (222) a vehicle ignition.

9. Method (1000) for setting a clearance (L) in a vehicle having a plurality of electromechanical brakes (1102, 1202, 1302, 1402), in particular a commercial vehicle (2000), wherein the method (200) for setting a release clearance (L) according to any of claims 1 to 8 is carried out for each of the brakes (1102, 1202, 1302, 1402).

10. Method (1000) according to claim 9, wherein the clearance test cycle is performed only for a first number of the electromechanical brakes (1102, 1202, 1302, 1402), which is less than the total number of electromechanical brakes 1102, 1202, 1302, 1402) present on the vehicle.

11. Control unit (8) for setting a clearance (L) of an electromechanical brake (100), in particular a commercial vehicle brake (100), having
- a first interface (10) for signal-conducting connection (6) of the control unit (8) to a brake actuator (2);
- a second interface (12) for signal-conducting connection (18) of the control unit (8) to an electrical clearance adjustment device (20);
- a data memory (14) and a processor (16),
wherein the control unit (8) is designed to
- activate a clearance test cycle for the brake (100);
- applying (204) at least one brake pad (103) of the brake (100) in the direction of a brake disc (105) by means of the brake actuator (2), and to ascertain a contact position (Kᵢₛₜ) in which the brake pad (103) comes into contact with the brake disc (105) during the application (204);
- determine the clearance (Lᵢₛₜ) and a degree of pad wear (V_{B}) on the basis of the ascertained contact position (Kᵢₛₜ), and
- calculate a clearance (L_{Soll}) required for the brake (100) and a required contact position (K_{Soll}) of the brake pad (103) and brake disc (105) on the basis of the degree of pad wear (V_{B}) using predefined parameters (P), and
- wherein the predefined parameters comprise (P):
- a brake characteristic curve and/or
- a stiffness characteristic map in which condition-dependent stiffness values are stored.

12. Control unit (8) according to claim 11,
wherein the control unit (8) is designed to
compare the ascertained contact position (Kᵢₛₜ) with the required contact position (K_{Soll}) and/or the ascertained clearance (Lᵢₛₜ) with the required clearance (L_{Soll}),
in the event that the ascertained contact position (Kᵢₛₜ) deviates from the required contact position (K_{Soll}) and/or the ascertained clearance (Lᵢₛₜ) deviates from the required clearance (L_{Soll}) by less than a tolerance value (T), to generate a brake-ready signal (212), and
in the event that the ascertained contact position (Kᵢₛₜ) deviates from the required contact position (K_{Soll}) and/or the ascertained clearance (Lᵢₛₜ) deviates from the required clearance (L_{Soll}) by more than a tolerance value (T), to calculate a required clearance adjustment distance (216).

13. Control unit (8) according to either claim 11 or claim 12,
wherein the control unit (8) is designed to
adjust the clearance (L) according to the calculated required clearance adjustment distance (216), and
to reactivate the clearance test cycle (202) for the brake (100).

14. Control unit (8) according to any of claims 11 to 13,
wherein the control unit (8) is designed to carry out one, several or all of the method steps of the method (200) according to any of claims 5 to 9.

15. Electromechanical brake (100), in particular for commercial vehicles, having a brake disc (105),
at least one brake pad (103) accommodated in a brake caliper (107),
an electromechanical brake actuator (2) for applying the at least one brake pad (103) in the direction of the brake disc (105),
an electric clearance adjustment device (20) for adjusting the clearance (L) between the brake disc (105) and the brake pad (103), and
a control unit (8),
**characterized in that** the control unit (8) is designed according to any of claims 11 to 14.

16. Computer program product comprising instructions which carry out the method (200, 1000) according to any of claims 1 to 10 when on a control unit (8) according to any of claims 11 to 14.

## Revendications

1. Procédé (200) permettant d'ajuster un jeu (L) d'un frein (100) électromécanique, en particulier d'un frein de véhicule utilitaire (100), comprenant les étapes consistant à :
- activer (202) un cycle d'essai de jeu pour le frein (100) ;
- serrer (204) au moins une garniture de frein (103) du frein (100) en direction d'un disque de frein (105) et déterminer (204a) une position de contact (Kᵢₛₜ) dans laquelle la garniture de frein (103) entre en contact avec le disque de frein (105) lors du serrage (204) ;
- définir (206) le jeu (Lᵢₛₜ) ainsi qu'un degré d'usure de garniture (V_{B}) sur la base de la position de contact (Kᵢₛₜ) déterminée ;
- calculer (208) un jeu (L_{Soll}) requis pour le frein (100) et une position de contact requise (K_{Soll}) entre la garniture de frein (103) et le disque de frein (105) en fonction du degré d'usure de garniture (V_{B}) à l'aide de paramètres prédéfinis (P),
dans lequel les paramètres prédéfinis (P) comprennent :
- une courbe caractéristique de freinage et/ou
- un champ caractéristique de rigidité, dans lequel sont enregistrées des valeurs de rigidité dépendant de l'état.

2. Procédé (200) selon la revendication 1, comprenant en outre l'étape consistant à :
- comparer (210) la position de contact (Kᵢₛₜ) déterminée avec la position de contact requise (K_{Soll}) et/ou le jeu (Lᵢₛₜ) déterminé avec le jeu requis (L_{Soll}), dans lequel, dans le cas où la position de contact (Kᵢₛₜ) déterminée diffère de la position de contact requise (K_{Soll}) et/ou le jeu (Lᵢₛₜ) déterminé diffère du jeu requis (L_{Soll}) de moins d'une valeur de tolérance (T), un signal de disponibilité de frein (212) est généré.

3. Procédé (200) selon la revendication 2,
dans lequel, dans le cas où la position de contact (Kᵢₛₜ) déterminée diffère de la position de contact requise (K_{Soll}) et/ou le jeu (Lᵢₛₜ) déterminé diffère du jeu requis (L_{Soll}) de plus d'une valeur de tolérance (T), une distance de réajustement de jeu (216) requise est calculée.

4. Procédé (200) selon la revendication 3, comportant les étapes supplémentaires consistant à :
- réajuster (218) le jeu (Lᵢₛₜ) conformément à la distance de réajustement de jeu (216) requise calculée ;
- activer de nouveau le cycle d'essai de jeu (202) pour le frein (100).

5. Procédé (200) selon la revendication 4,
dans lequel un signal d'erreur (220) est généré dans le cas où aucune position de contact (Kᵢₛₜ) ou aucun jeu (Lᵢₛₜ) ne peut être trouvé, pour laquelle ou pour lequel la position de contact (Kᵢₛₜ) déterminée diffère de la position de contact requise (K_{Soll}) et/ou le jeu (Lᵢₛₜ) déterminé diffère du jeu requis (Lₛₒₗₗ) de moins d'une valeur de tolérance (T).

6. Procédé (200) selon la revendication 4,
dans lequel le réajustement (218) du jeu (L) est effectué au moyen d'un dispositif de réajustement de jeu électrique (20), en particulier au moyen d'un entraînement électrique (20).

7. Procédé (200) selon l'une des revendications 3 à 6, en particulier selon la revendication 6,
dans lequel le calcul (216) de la distance de réajustement de jeu (218) nécessaire présente la définition de paramètres de fonctionnement pour le dispositif de réajustement de jeu électrique (20), en particulier la spécification d'une position de réajustement pour l'entraînement électrique (20).

8. Procédé (200) selon l'une des revendications précédentes,
dans lequel l'activation (202) du cycle d'essai de jeu est effectuée avant chaque mise en service de véhicule, en particulier par l'activation (222) d'un allumage de véhicule.

9. Procédé (1000) permettant d'ajuster un jeu (L) dans un véhicule comportant plusieurs freins (1102, 1202, 1302, 1402) électromécaniques, en particulier un véhicule utilitaire (2000), dans lequel, pour chacun des freins (1102, 1202, 1302, 1402), le procédé (200) permettant d'ajuster un jeu (L) selon l'une des revendications 1 à 8 est mis en oeuvre.

10. Procédé (1000) selon la revendication 9, dans lequel le cycle d'essai de jeu n'est effectué que pour un premier nombre de freins (1102, 1202, 1302, 1402) électromécaniques qui est inférieur au nombre total de freins (1102, 1202, 1302, 1402) électromécaniques présents sur le véhicule.

11. Appareil de commande (8) permettant d'ajuster un jeu (L) d'un frein (100) électromécanique, en particulier d'un frein de véhicule utilitaire (100), comportant
- une première interface (10) pour la connexion (6) d'une manière conductrice de signaux de l'appareil de commande (8) à un actionneur de frein (2) ;
- une seconde interface (12) pour la connexion (18) d'une manière conductrice de signaux de l'appareil de commande (8) à un dispositif de réajustement de jeu électrique (20) ;
- une mémoire de données (14) et un processeur (16),
dans lequel l'appareil de commande (8) est configuré pour
- activer un cycle d'essai de jeu pour le frein (100) ;
- provoquer un serrage (204) d'au moins une garniture de frein (103) du frein (100) en direction d'un disque de frein (105) au moyen de l'actionneur de frein (2) et déterminer une position de contact (Kᵢₛₜ) dans laquelle la garniture de frein (103) entre en contact avec le disque de frein (105) lors du serrage (204) ;
- définir le jeu (Lᵢₛₜ) ainsi qu'un degré d'usure de garniture (V_{B}) sur la base de la position de contact (Kᵢₛₜ) déterminée, et
- calculer un jeu (L_{Soll}) requis pour le frein (100) et une position de contact requise (K_{Soll}) entre la garniture de frein (103) et le disque de frein (105) en fonction du degré d'usure de garniture (V_{B}) à l'aide de paramètres prédéfinis (P) et
- dans lequel les paramètres prédéfinis (P) comprennent :
- une courbe caractéristique de freinage et/ou
- un champ caractéristique de rigidité, dans lequel sont enregistrées des valeurs de rigidité dépendant de l'état.

12. Appareil de commande (8) selon la revendication 11,
dans lequel l'appareil de commande (8) est configuré pour
comparer la position de contact (Kᵢₛₜ) déterminée avec la position de contact requise (K_{Soll}) et/ou le jeu (Lᵢₛₜ) déterminé avec le jeu requis (L_{Soll}),
dans le cas où la position de contact (Kᵢₛₜ) déterminée diffère de la position de contact requise (K_{Soll}) et/ou le jeu (Lᵢₛₜ) déterminé diffère du jeu requis (L_{Soll}) de moins d'une valeur de tolérance (T), générer un signal de disponibilité de frein (212), et
dans le cas où la position de contact (Kᵢₛₜ) déterminée diffère de la position de contact requise (K_{Soll}) et/ou le jeu (Lᵢₛₜ) déterminé diffère du jeu requis (Lₛₒₗₗ) de plus d'une valeur de tolérance (T), calculer une distance de réajustement de jeu (216) requise.

13. Appareil de commande (8) selon l'une des revendications 11 ou 12,
dans lequel l'appareil de commande (8) est configuré pour
réajuster le jeu (L) conformément à la distance de réajustement de jeu (216) requise calculée, et
activer de nouveau le cycle d'essai de jeu (202) pour le frein (100).

14. Appareil de commande (8) selon l'une des revendications 11 à 13,
dans lequel l'appareil de commande (8) est configuré pour mettre en oeuvre une, plusieurs ou toutes les étapes de procédé du procédé (200) selon l'une des revendications 5 à 9.

15. Frein (100) électromécanique, en particulier pour un véhicule utilitaire, comportant un disque de frein (105),
au moins une garniture de frein (103) reçue dans un étrier de frein (107),
un actionneur de frein (2) électromécanique permettant de serrer l'au moins une garniture de frein (103) en direction du disque de frein (105),
un dispositif de réajustement de jeu électrique (20) permettant d'ajuster le jeu (L) entre le disque de frein (105) et la garniture de frein (103), et
un appareil de commande (8),
**caractérisé en ce que** l'appareil de commande (8) est configuré selon l'une des revendications 11 à 14.

16. Produit programme informatique comprenant des instructions qui mettent en oeuvre le procédé (200, 1000) selon l'une des revendications 1 à 10 lorsqu'elles sont sur un appareil de commande (8) selon l'une des revendications 11 à 14.
